# EUROPEAN PATENT APPLICATION

(11) **EP 4 671 939 A1**
(43) Date of publication of application: **31.12.2025**
(21) Application number: 24777984.6
(22) Date of filing: 25.03.2024
(51) Int. Cl.: G06F 3/04817, G06F 3/0484

(54) **DESKTOP MANAGEMENT METHOD, SYSTEM, AND ELECTRONIC DEVICE**

(30) Priority: 27.03.2023 CN 202310355218
(71) Applicant: Huawei Technologies Co., Ltd., Shenzhen, Guangdong 518129 (CN)
(72) Inventor: PENG, Qi, Shenzhen, Guangdong 518129 (CN); QI, Yunfei, Shenzhen, Guangdong 518129 (CN); WAN, Xiaoxiao, Shenzhen, Guangdong 518129 (CN)
(74) Representative: Maiwald GmbH
(86) International application number: PCT/CN2024/083650
(87) International publication number: WO 2024/199196

(57) **Abstract**

Embodiments of this application provide a desktop management method, a system, and an electronic device. The method is applied to an electronic device. The method includes: The electronic device displays a desktop folder on a desktop, where the desktop folder is used to display at least one icon; and the electronic device adds, to the desktop folder in response to a user operation on target data, a first icon corresponding to the target data. In the method, a user can add an icon to the desktop folder without performing cumbersome user operations, so that user experience can be improved.

## Description

This application claims priority to Chinese Patent Application No. 202310355218.8, filed with the China National Intellectual Property Administration on March 27, 2023, and entitled "DESKTOP MANAGEMENT METHOD, SYSTEM, AND ELECTRONIC DEVICE", which is incorporated herein by reference in its entirety.

### TECHNICAL FIELD

Embodiments of this application relate to the field of electronic technologies, and in particular, to a desktop management method, a system, and an electronic device.

### BACKGROUND

A user usually sets a plurality of icons on a desktop of an electronic device, for example, a file icon or an application icon. Further, the user may tap an icon on the desktop, so that the electronic device quickly displays content corresponding to the icon.

Currently, the electronic device may manage the icon on the desktop by using a widget corresponding to a folder. For example, the electronic device may create, on the desktop, the widget corresponding to the folder, and the widget includes icons of all files in the folder. However, when the user wants to add a file to the widget, the user needs to first perform a user operation on the widget, that is, open the folder corresponding to the widget through a specific path; and then perform a user operation on the to-be-added file, that is, add the to-be-added file to the folder corresponding to the widget, so that the file can be added to the widget.

The foregoing desktop management method requires cumbersome user operations, and consequently user experience is poor. How to implement convenient and efficient desktop management is an urgent problem to be resolved currently in the industry.

### SUMMARY

This application provides a desktop management method, a system, and an electronic device. In the method, an electronic device may add, to a desktop folder based on a user operation on target data, a first icon corresponding to the target data, so that the user operation is simplified, and user experience can be improved.

According to a first aspect, an embodiment of this application provides a desktop management method, applied to an electronic device. The method includes:

The electronic device displays a desktop folder on a desktop, where the desktop folder is used to display at least one icon; and
the electronic device adds, to the desktop folder in response to a user operation on target data, a first icon corresponding to the target data.

In this embodiment of this application, the electronic device may add, to the desktop folder in response to a user operation of adding the target data to the desktop or the desktop folder, the first icon corresponding to the target data. In the method, a user does not need to perform a user operation on the desktop folder, and can add, to the desktop folder only by using the user operation on the target data, the first icon corresponding to the target data, so that the user operation is simplified, and user experience can be improved.

With reference to the first aspect, in a possible implementation, that the electronic device adds, to the desktop folder in response to the user operation on the target data, the first icon corresponding to the target data includes:

The electronic device displays the first icon in the desktop folder in response to a user operation of dragging the target data to the desktop.

In this embodiment of this application, the first icon corresponding to the target data can be added to the desktop folder by using the user operation of dragging the target data to the desktop, so that the user operation is simplified, and user experience can be improved.

With reference to the first aspect, in a possible implementation, that the electronic device adds, to the desktop folder in response to the user operation on the target data, the first icon corresponding to the target data includes:

The electronic device displays a setting bar in response to a user operation of indicating to display the setting bar of the target data, where the setting bar includes a save control, and the save control is used to save the target data to the desktop; and
the electronic device displays the first icon in the desktop folder in response to a user operation on the save control.

In this embodiment of this application, when receiving the user operation of saving the target data to the desktop, the electronic device may add, to the desktop folder, the first icon corresponding to the target data. In this method, desktop icons are automatically arranged, so that user experience can be improved.

With reference to the first aspect, in a possible implementation, the desktop folder includes a plurality of areas, and each of the plurality of areas is used to display an icon corresponding to data of one data type; the plurality of areas include a first area; and adding, to the desktop folder, the first icon corresponding to the target data includes:

The electronic device displays the first icon in the first area, where a data type corresponding to the first area is a data type of the target data.

In this embodiment of this application, the electronic device may display, based on the data type, the icon in the desktop folder on a per-area basis. When the user adds an icon to the desktop or the desktop folder, the electronic device may automatically identify a data type of data corresponding to the icon, and display the icon in an area corresponding to the data type of the icon. In this method, the user does not need to manually classify the desktop icons, so that classification accuracy can be improved, and a personalized requirement of the user can be met. In addition, the desktop can be tidier, and user experience can be improved.

With reference to the first aspect, in a possible implementation, the data type includes at least one of the following: a picture, a video, a document, or a compressed package.

With reference to the first aspect, in a possible implementation, before adding, to the desktop folder, the first icon corresponding to the target data, the method includes:

The electronic device displays a first application window on the desktop, where the first application window includes the target data, and the target data is local data or online data.

In this embodiment of this application, the electronic device may add the data in the application window to the desktop folder in response to the user operation. In this method, the user operation is simple, so that user experience can be improved.

With reference to the first aspect, in a possible implementation, the method further includes:

The electronic device displays a file folder on the desktop in response to a user operation on a second icon in the desktop folder, where the file folder is used to display a file icon in a folder corresponding to the second icon.

In this embodiment of this application, the electronic device may create the folder in the desktop folder as the file folder in response to the user operation. In the method, the desktop folder can be conveniently created.

With reference to the first aspect, in a possible implementation, the desktop folder includes a plurality of areas, and each of the plurality of areas is used to display an icon corresponding to data of one data type; each of the plurality of areas corresponds to one foldable control; and the foldable control is used to display all icons in the area corresponding to the foldable control, or display a part of icons in the area corresponding to the foldable control.

In this embodiment of this application, the electronic device may separately fold and display icons in the areas in the desktop folder or display all the icons. In the method, personalized selection is provided for the user to display, so that the personalized requirement of the user can be met, and user experience can be improved.

With reference to the first aspect, in a possible implementation, the target data includes at least one of the following: a file, a folder, an application, or an application icon.

With reference to the first aspect, in a possible implementation, a display manner of the at least one icon in the desktop folder is a list view or a grid view.

In this embodiment of this application, the electronic device provides different display manners of the icons in the desktop folder, so that the user can perform selection based on a personal preference, and user experience can be improved.

With reference to the first aspect, in a possible implementation, the method further includes:

The electronic device adjusts an appearance of the desktop folder in response to a set operation on the desktop folder, where the appearance includes at least one of the following: a size, a location, background transparency, and a background blur value.

In this embodiment of this application, the electronic device provides a plurality of choices for appearance settings in the desktop folder, so that the user can perform selection based on the personal preference, and user experience can be improved.

With reference to the first aspect, in a possible implementation, icons in the desktop folder are associated with a theme, and the icons in the desktop folder include at least one of a service widget, an application icon, a file icon, and a folder icon.

In this embodiment of this application, the user may create the desktop folder based on the theme, and add, to the desktop folder corresponding to the theme, content related to the theme. In the method, the user may perform theme settings and content adjustment on the desktop folder based on a requirement, so that the personalized requirement of the user is met, and user experience can be improved.

In a possible implementation, the electronic device may automatically identify content, for example, an application or a file, that is related to the theme of the desktop folder, and add the content to the desktop folder. In the method, the electronic device may intelligently add, to the desktop folder, the content related to the theme, so that user experience is improved.

According to a second aspect, an embodiment of this application provides a desktop management method, applied to an electronic device. The method includes:

The electronic device displays a desktop folder on a desktop, where the desktop folder is used to display at least one icon, the desktop folder includes a plurality of areas, and each of the plurality of areas is used to display an icon corresponding to data of one data type; and the plurality of areas include a first area; and
the electronic device adds, to the first area in response to a user operation on target data, a first icon corresponding to the target data, where a data type corresponding to the first area is a data type of the target data.

In this embodiment of this application, the electronic device may display, based on the data type, the icon in the desktop folder on a per-area basis. When the user adds an icon to the desktop or the desktop folder, the electronic device may automatically identify a data type of data corresponding to the icon, and display the icon in an area corresponding to the data type of the icon. In this method, the user does not need to manually classify desktop icons, so that classification accuracy can be improved, and a personalized requirement of the user can be met. In addition, the desktop can be tidier, and user experience can be improved.

For another implementation, refer to the implementation of the first aspect.

According to a third aspect, this application provides an electronic device. The electronic device may include a memory and a processor. The memory may be configured to store a computer program. The processor may be configured to invoke the computer program, so that the electronic device performs any one of the first aspect, the second aspect, or the possible implementations of the first aspect.

According to a fourth aspect, this application provides a computer program product including instructions. When the computer program product is run on an electronic device, the electronic device is enabled to perform any one of the first aspect, the second aspect, or the possible implementations of the first aspect.

According to a fifth aspect, this application provides a computer-readable storage medium. The computer-readable storage medium includes instructions. When the instructions are run on an electronic device, the electronic device is enabled to perform any one of the first aspect, the second aspect, or the possible implementations of the first aspect.

It may be understood that the electronic device provided in the third aspect, the computer program product provided in the fourth aspect, and the computer-readable storage medium provided in the fifth aspect are all configured to perform the method provided in embodiments of this application. Therefore, for beneficial effect that can be achieved by the electronic device, the computer program product, and the computer-readable storage medium, refer to the beneficial effect in the corresponding method. Details are not described herein again.

### BRIEF DESCRIPTION OF DRAWINGS

FIG. 1 is a diagram of a hardware structure of an electronic device 100 according to an embodiment of this application;
FIG. 2 is a block diagram of a software structure of an electronic device 100 according to an embodiment of this application;
FIG. 3A to FIG. 3F are examples of some user interfaces shown when an icon is added to a desktop folder on an electronic device according to an embodiment of this application;
FIG. 4A to FIG. 4D are examples of some user interfaces of a desktop folder for classification management implemented on an electronic device according to an embodiment of this application;
FIG. 5A and FIG. 5B are examples of some user interfaces shown when a folding function of a desktop folder is implemented on an electronic device according to an embodiment of this application;
FIG. 6A to FIG. 6C describe examples of some user interfaces, of a desktop folder, implemented on an electronic device;
FIG. 7A and FIG. 7B describe examples of some user interfaces of a desktop folder for personalized settings implemented on an electronic device;
FIG. 8A to FIG. 8C are some user interfaces of a desktop folder added on an electronic device according to an embodiment of this application; and
FIG. 9A to FIG. 9C are diagrams of a desktop folder corresponding to a theme on an electronic device according to an embodiment of this application.

### DESCRIPTION OF EMBODIMENTS

The following clearly and completely describes technical solutions in embodiments of this application with reference to the accompanying drawings. In descriptions of embodiments of this application, "/" indicates "or", unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in descriptions of embodiments of this application, "a plurality of" means two or more than two.

In the following, the terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The term "user interface (user interface, UI)" in the following embodiments of this application is a medium interface for interaction and information exchange between an application or an operating system and a user, and implement conversion between an internal form of information and a form acceptable to the user. The user interface is source code written in a specific computer language, for example, Java or an extensible markup language (extensible markup language, XML). Interface source code is parsed and rendered on an electronic device, and is finally presented as user-recognizable content. A frequently-used representation form of the user interface is a graphical user interface (graphical user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a widget that is displayed on a display of the electronic device.

Embodiments of this application provide a desktop management method, an electronic device, and a system. In the method, an electronic device may display a desktop folder, where the desktop folder may include at least one icon; and the electronic device may display, in the desktop folder in response to a user operation of placing target data into the desktop folder, an icon corresponding to the target data.

The target data may be local data or online data. The data may be specifically a file, a folder, an application, or an application icon, that is, the target data may be specifically an icon corresponding to the file, an icon corresponding to the folder, or the application icon. The user operation may be a drag operation on the target data, or a set operation on the target data. For details, refer to the following embodiments. Details are not described herein.

In the method, when a user wants to add an icon to the desktop folder, the user does not need to perform the user operation on the desktop folder, and may directly perform a user operation on data corresponding to the added icon. Correspondingly, the electronic device displays, in the desktop folder in response to the user operation on the data, the icon corresponding to the data. In this method, user experience can be effectively improved without cumbersome user operations.

The electronic device may be specifically a mobile phone, a tablet computer, a desktop computer, a laptop computer, a handheld computer, a notebook computer, an ultra-mobile personal computer (ultra-mobile personal computer, UMPC), a netbook, or the like. An example embodiment of the electronic device includes but is not limited to a portable electronic device carrying an iOS^{®}, Android^{®}, Harmony^{®}, Windows^{®}, Linux, or another operating system. The electronic device may alternatively be another portable electronic device, for example, a laptop (Laptop) computer. It should be further understood that in some other embodiments, the electronic device may not be a portable electronic device but a desktop computer.

The following describes an example of an electronic device provided in embodiments of this application.

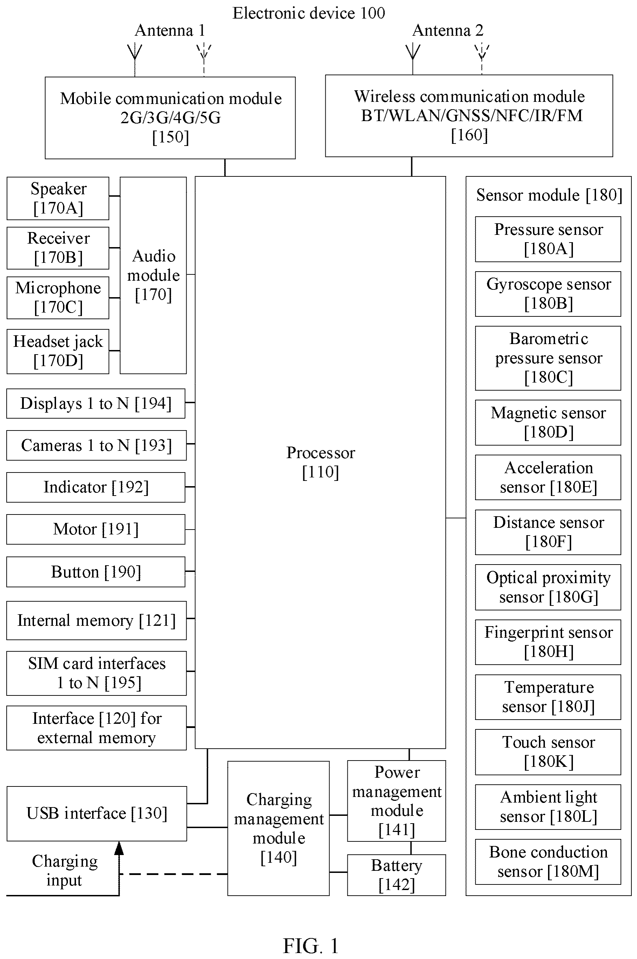

FIG. 1 is a diagram of a hardware structure of an electronic device 100.

The electronic device 100 is used as an example below to describe embodiments in detail. It should be understood that the electronic device 100 may have more or fewer components than those shown in the figure, may combine two or more components, or may have different component configurations. Components shown in the figure may be implemented by hardware, software, or a combination of hardware and software that includes one or more signal processing and/or application-specific integrated circuits.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that have/has been used or are/is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM card interface may be configured to communicate with the SIM card interface 195, to implement a function of transmitting data to a SIM card or reading data in a SIM card.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device, or may be configured to be connected to a headset for playing audio through a headset. Alternatively, the interface may be configured to be connected to another electronic device, for example, an AR device.

It may be understood that an interface connection relationship between modules illustrated in embodiments of this application is merely an illustrative description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger.

The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computing, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation and the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, voice recognition, and text understanding.

The interface 120 for external memory may be configured to be connected to an external storage card, for example, a micro SD card, to extend a storage capability of the electronic device 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function), and the like. The data storage area may store data (for example, facial information template data and a fingerprint information template) created in a process of using the electronic device 100. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode through the speaker 170A. The receiver 170B, also referred to as an "earpiece", is configured to convert an electrical audio signal into a sound signal. When a call is answered or voice information is received through the electronic device 100, the receiver 170B may be put close to a human ear to listen to a voice. The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to be connected to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also compute a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a messaging application icon, an instruction for viewing an SMS message is performed. When a touch operation whose touch operation intensity is greater than or equal to the first pressure threshold is performed on the messaging application icon, an instruction for creating a new SMS message is performed.

The gyroscope sensor 180B may be configured to determine a moving posture of the electronic device 100. In some embodiments, an angular velocity of the electronic device 100 around three axes (that is, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, computes, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 computes an altitude through the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a flip phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear for a call, to automatically turn off a screen for power saving. The optical proximity sensor 180G may also be configured to automatically perform screen unlocking or locking in a leather case mode and a pocket mode.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor, to determine a type of a touch event. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, may be configured to indicate a charging status and a power change, or may be configured to synthesize requests, a missed call, a notification, and the like.

The SIM card interface 195 is configured to be connected to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication.

In embodiments of this application, the electronic device 100 may perform, through the processor 110, the desktop management method provided in embodiments of this application, and display, through the display 194, the user interface provided in embodiments of this application.

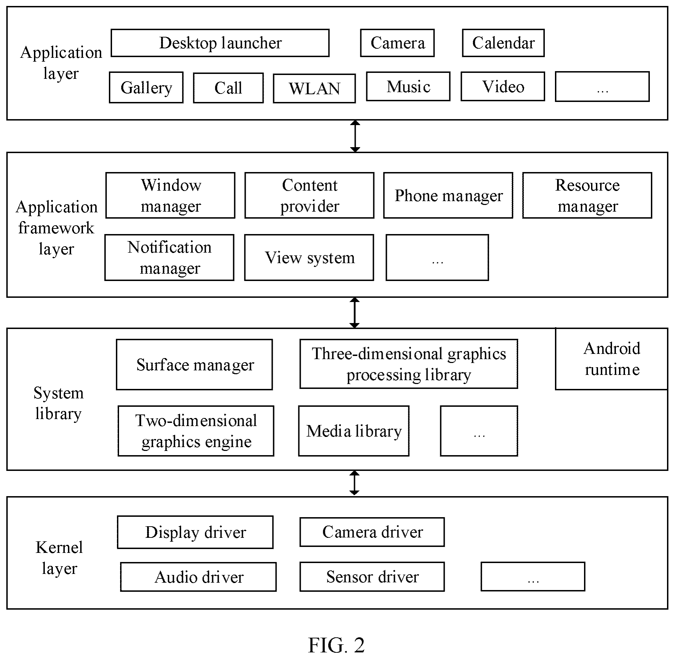

FIG. 2 is a block diagram of a software structure of an electronic device 100 according to an embodiment of this application.

In a layered architecture, software is divided into several layers, and each layer has a clear role and task. The layers communicate with each other through a software interface. In some embodiments, the system is divided into four layers: an application layer, an application framework layer, a runtime (runtime) and a system library, and a kernel layer from top to bottom.

The application layer may include a series of application packages.

As shown in FIG. 2, the application packages may include application programs (which may also be referred to as applications) such as Desktop launcher, Camera, Browser, Calendar, Call, Map, Navigation, WLAN, Bluetooth, Music, Video, and Messaging.

Desktop launcher is configured to display elements such as a desktop folder, an application window, and an icon.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, a phone book, and the like.

The view system includes visual controls such as a control for displaying a text and a control for displaying a picture. The view system may be configured to construct an application. A display interface may include one or more views. For example, a display interface including a messaging notification icon may include a view for displaying a text and a view for displaying a picture.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively display a notification in a form of a chart or a scroll bar text in a status bar at the top of the system, for example, a notification of an application run in the background, or may display a notification in a form of a dialog interface on the screen. For example, text information is prompted in the status bar, an alert tone is made, an electronic device vibrates, or an indicator light blinks.

The runtime (runtime) includes a core library and a virtual machine. The runtime is responsible for scheduling and management of the system.

The core library includes two parts: a performance function that needs to be invoked by a programming language (for example, Java language), and a system core library.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem, and provide fusion of two-dimensional (2-Dimensional, 2D) and three-dimensional (3-Dimensional, 3D) layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer may include a display driver, a camera driver, an audio driver, a sensor driver, and a virtual card driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

The following describes a desktop management method with reference to a user interface implemented on an electronic device provided in embodiments of this application.

It should be noted that in embodiments of this application, a user operation may be a touch operation (for example, a tap operation, a touch and hold operation, a slide-up operation, a slide-down operation, or a side-slide operation) of a user, or may be a non-contact operation (for example, an air gesture or a mouse operation), or may be a voice instruction of the user. This is not specifically limited in embodiments of this application. For ease of description, the following embodiments are described by using examples in which the user performs an operation by using a mouse.

First, an embodiment in which an electronic device adds an icon to a desktop folder is described.

In some embodiments, the electronic device may display the desktop folder on a desktop, where the desktop folder includes an icon corresponding to at least one piece of data, and the data may be a file, a folder, and an application. Further, the electronic device may display, in the desktop folder in response to a user operation of placing target data into the desktop folder, an icon corresponding to the target data, where the target data may be online data or local data, and the target data may be specifically a file, a folder, an application, or the like. The local data may be any type of data in any local application, and the type may include a picture, a video, a document, others, a file, a compressed package, and the like.

The desktop folder may be an area displayed on the desktop. In some embodiments, the area may cover the desktop, or the area may be embedded inside the desktop. For example, a new layer may be created on the desktop to display the desktop folder, and the desktop folder covers the desktop; or the desktop folder itself is at a layer of the desktop, and belongs to a part of the desktop.

For example, when the desktop folder covers the desktop, elements such as an application icon and a file may still be displayed in a desktop area covered by the desktop folder; or the desktop folder and an element such as an application icon outside the desktop folder are in a peer relationship, in other words, the desktop folder and the element outside the desktop folder cannot cover and be displayed on the desktop, and an area on the desktop cannot be covered by both the desktop folder and the element outside the desktop folder.

Optionally, the desktop folder may freely move on the desktop. For example, when the desktop folder is in a peer relationship with the element such as the application icon outside the desktop folder, when the user needs to move the desktop folder to a desktop location at which the element outside the desktop folder is located, the user needs to move the element at the desktop location to another location before moving the desktop folder to the desktop location.

It should be understood that the desktop folder may be an information carrier with a closed contour, and provides important or closely related information intuitively and quickly in a concentrated form, for information displaying and exchange. A shape of the desktop folder is usually a rectangle, and certainly may alternatively be another shape. The desktop folder enables the user of the electronic device to obtain information and perform an operation more conveniently and intuitively. A size, a location, a shape, and the like of the desktop folder are not limited in this embodiment of this application.

It should be understood that the desktop folder is an example for description provided in this embodiment of this application. In another embodiment of this application, the desktop folder may also be referred to as a widget or the like.

The following uses an example in which the target data is an online file and a local file, to describe a process of adding, to the desktop folder, the icon corresponding to the target data.

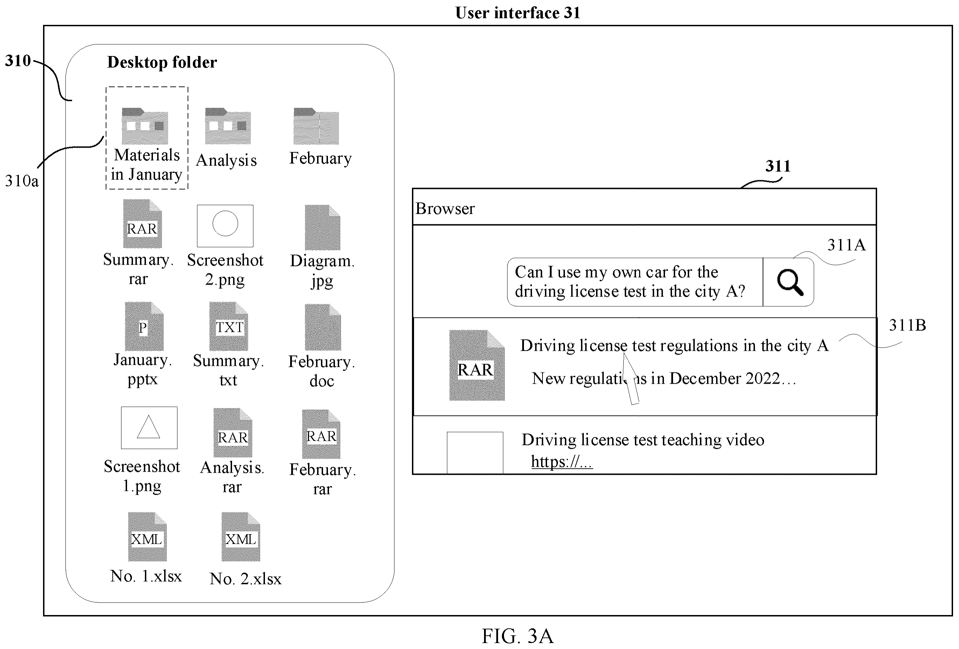

Refer to FIG. 3A to FIG. 3D. FIG. 3A to FIG. 3D are examples of related user interfaces shown when the online file is saved to the desktop folder on the electronic device according to an embodiment of this application.

FIG. 3A is an example of a user interface 31 on the electronic device according to an embodiment of this application. As shown in FIG. 3A, the user interface 31 includes a desktop folder 310 and an application interface 311. The desktop folder 310 includes a plurality of icons, for example, an icon 310a corresponding to a folder named "Materials in January", and the icon 310a includes a thumbnail and a name of the folder. The application interface 311 is an application interface corresponding to a browser, and the application interface 311 includes a retrieval bar 311A and a plurality of retrieval results. For example, one of the retrieval results is a document 311B "Driving license test regulations in the city A".

For example, the icons of the desktop folder 310 may be icons corresponding to different data respectively, and the icons are used to display the data corresponding to the icons. As shown in FIG. 3A, the desktop folder 310 includes the icon 310a corresponding to the folder named "Materials in January". When detecting a user operation of opening the icon 310a, the electronic device may display specific content in the folder.

It should be understood that the desktop folder 310 is merely an example provided in this embodiment of this application. The desktop folder provided in this application may further include more or fewer controls than the desktop folder 310. This is not limited in embodiments of this application. The following describes another control and function of the desktop folder by using examples. Details are not described herein.

In some embodiments, the electronic device may save the online file to the desktop folder on the desktop in response to a user operation (for example, clicking a right mouse button) on file settings of the online file.

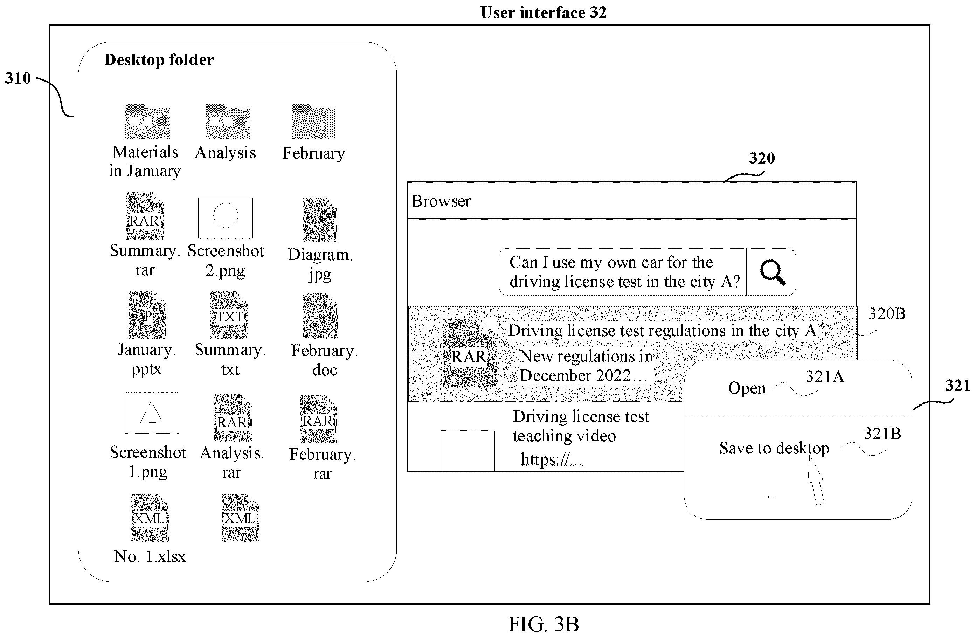

As shown in FIG. 3A, when detecting a user operation of indicating to display a setting bar of the document 311B (for example, clicking the right mouse button by using a mouse when a cursor is located in the document 311B), the electronic device may display, in response to the user operation, the setting bar corresponding to the document 311B. For example, the electronic device may display a user interface 32 shown in FIG. 3B, and the user interface 32 includes a setting bar 321 corresponding to the document 311B.

Optionally, the electronic device may also display the document 311B as a selected state, for example, display the document 311B as 320B in the user interface 32. In FIG. 3B, a gray background is used as an example to represent the selected state.

As shown in FIG. 3B, the user interface 32 may include a desktop folder 310, an application interface 320, and a setting bar 321, the application interface 320 includes the document 320B, the setting bar 321 includes an open control 321A and a save control 321B, the open control 321A is used to display specific content of the document, and the save control 321B is used to save the document to the desktop.

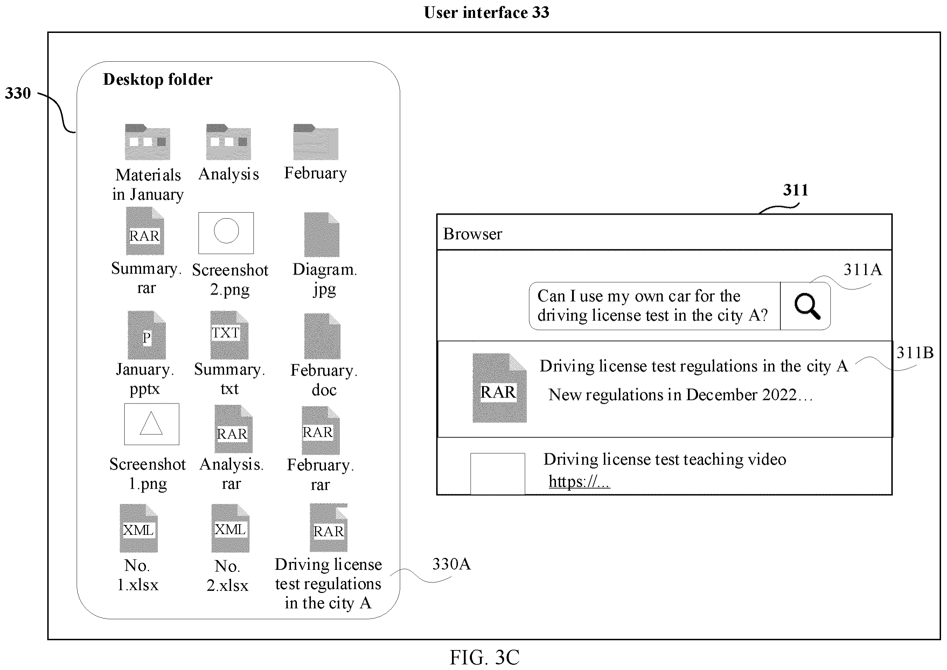

As shown in FIG. 3B, for a user operation on the save control 321B, the electronic device may download, in response to the user operation, a file corresponding to the document 320B, and display, in the desktop folder, an icon corresponding to the file. For example, the electronic device may display a user interface 33 shown in FIG. 3C, and a desktop folder 330 in the user interface 33 displays an icon 330A corresponding to the file.

For example, a difference between the user interface 33 and the user interface 31 may only lie in that the icon 330A is added to the desktop folder 330 in the user interface 33 compared with the desktop folder 310 in the user interface 31.

In some other embodiments, the electronic device may save the online file to the desktop folder on the desktop in response to a user operation of dragging the online file.

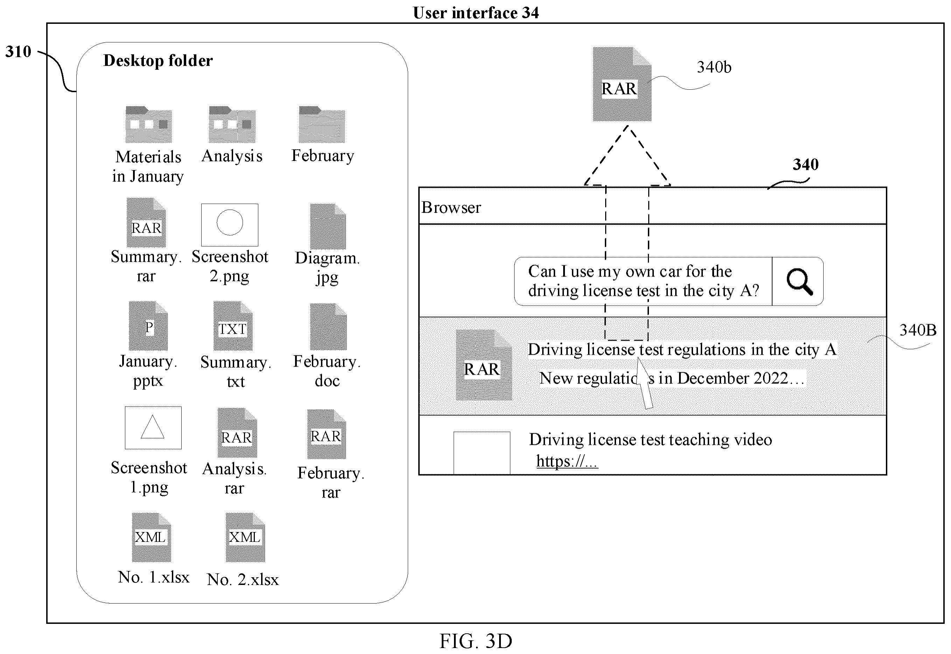

As shown in FIG. 3A, when detecting a user operation of selecting the document 311B (for example, clicking and holding the document 311B by using a left mouse button), the electronic device may display, in response to the user operation, the document 311B as a document 340B in a selected state shown in FIG. 3D; further, when detecting a user operation of dragging the document 340B shown in FIG. 3D, display, on the desktop, a track of an icon 340b corresponding to the document 340B; and when detecting a user operation of dragging the icon 340b to a desktop area and releasing the icon 340b, display, in the desktop folder, a file icon corresponding to the document 340B. For example, the electronic device may display the user interface 33 shown in FIG. 3C, and the desktop folder 330 in the user interface 33 includes the file icon 330A corresponding to the document 340B. The desktop area may be an area other than a current application interface 340 in a current user interface 34.

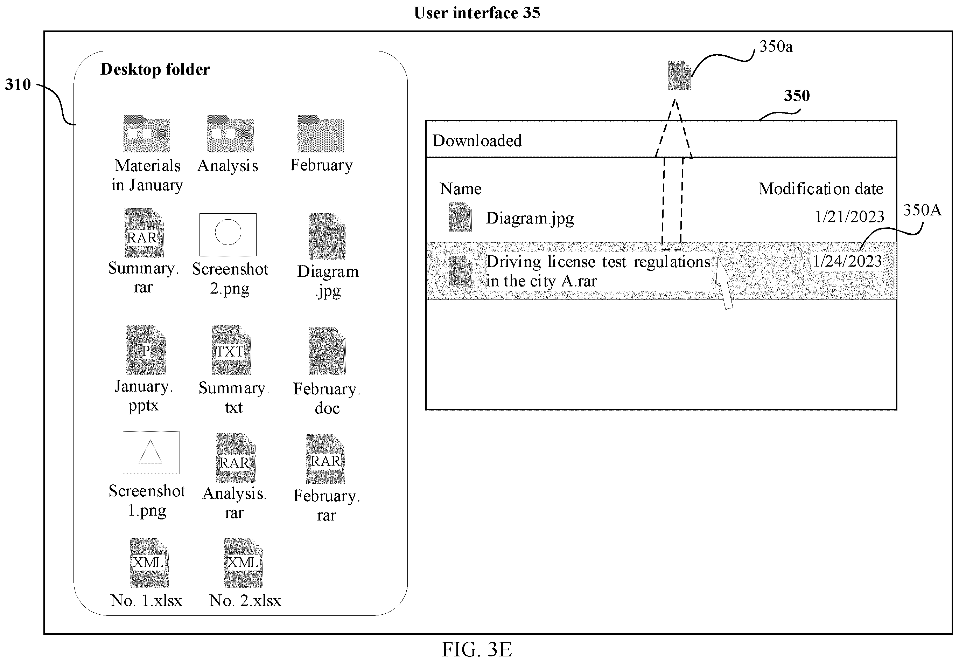

Refer to FIG. 3E to FIG. 3F. FIG. 3E to FIG. 3F are examples of related user interfaces shown when the local file is saved to the desktop folder on the electronic device according to an embodiment of this application.

FIG. 3E is an example of a user interface 35 on the electronic device according to an embodiment of this application. As shown in FIG. 3E, the user interface 35 includes the desktop folder 310 and a local folder 350. For example, the local folder 350 includes a downloaded document, for example, a document 350A of "Driving license test regulations in the city A".

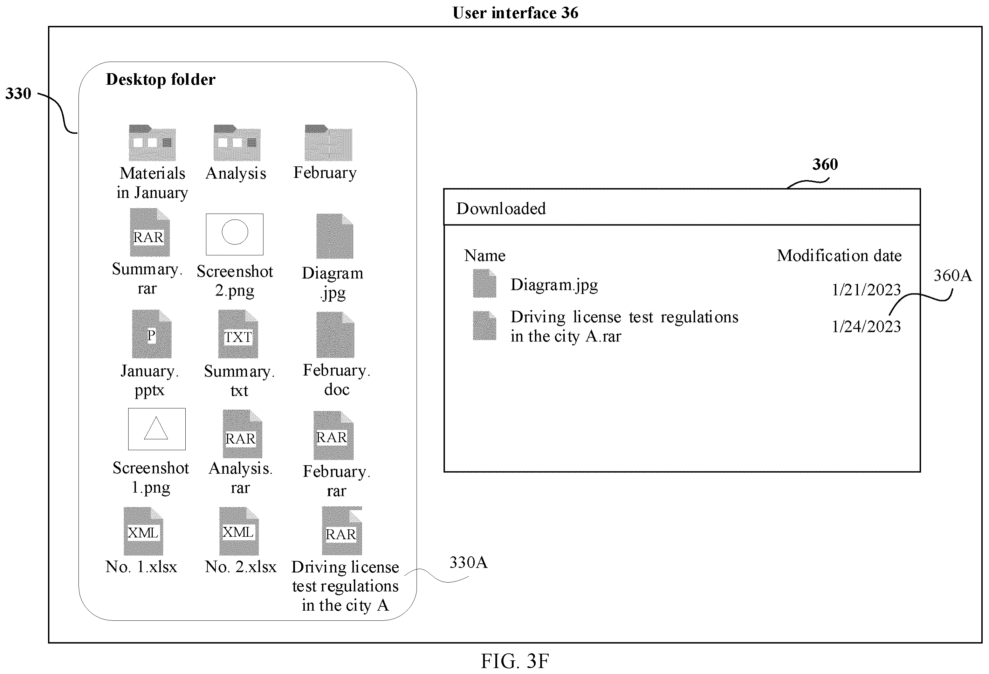

As shown in FIG. 3E, when detecting a user operation of dragging the document 350A to the desktop (for example, holding the document 311B and moving a cursor by using a left mouse button), the electronic device may display, on the desktop in response to the user operation, a track of an icon 350a corresponding to the document 350A; and when detecting a user operation of dragging the icon 350a to a desktop area and releasing the icon 350a, display, in the desktop folder, a file icon corresponding to the document 350A. As shown in FIG. 3F, the electronic device may display a user interface 36, and the file icon 330A corresponding to the document 350Ais displayed in the desktop folder 330 in the user interface 36.

The user interface 36 includes the desktop folder 330 and a local folder 360, and the local folder 360 includes a document 360A. A difference between the local folder 360 and the local folder 350 of the user interface 35 may only lie in that the document 360A in the local folder 360 is in an unselected state, and the document 350A in the local folder 350 is in a selected state.

Next, the foregoing desktop folder is described by using examples.

The following describes an example of a desktop folder for classification management.

In some embodiments, the electronic device may further classify and display data in the desktop folder, that is, display icons of different types of data in different areas of the desktop folder. For example, the electronic device may display, in the desktop folder, a plurality of areas obtained through division, where each of the plurality of areas is used to display one type of data; and further, when the electronic device saves target data to the desktop, the electronic device displays, in the desktop folder, an icon of the target data in an area corresponding to a type of the target data.

The type may include one or more of a picture, a video, a document, others, a file, and a compressed package. For example, the desktop folder may be divided into four types of areas: a picture, a video, a document, and others. For another example, the desktop folder may be divided into five types of areas: a file, a picture, a document, a compressed package, and others. The type and a quantity of types are not limited in this embodiment of this application.

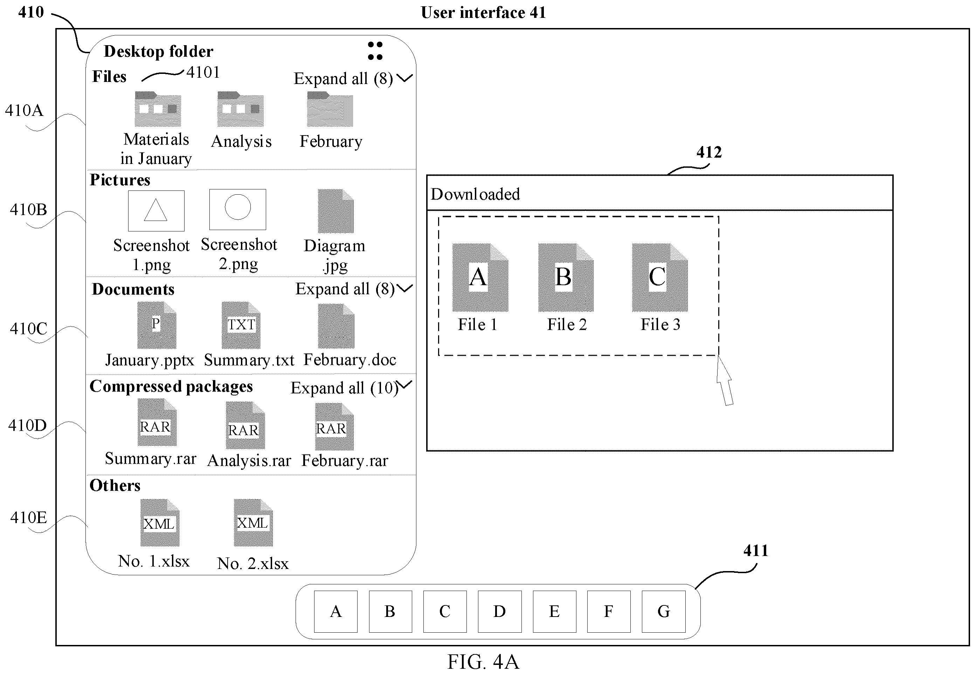

Refer to FIG. 4A to FIG. 4D. FIG. 4A to FIG. 4D are examples of some user interfaces of the desktop folder for classification management implemented on the electronic device according to an embodiment of this application. It should be understood that FIG. 4A to FIG. 4D are described by using the local file as an example. For a specific process of adding an icon to the desktop folder for classification management, refer to related content in FIG. 3A to FIG. 3F above.

In some embodiments, the electronic device may save, to the desktop folder by file settings of a file, the file in an area corresponding to a type of the file.

FIG. 4A is an example of a user interface 41 on the electronic device according to an embodiment of this application. As shown in FIG. 4A, the user interface 41 includes a desktop folder 410, an application bar 411, and a folder 412.

The desktop folder 410 includes a plurality of areas corresponding to different types, for example, an area 410A corresponding to a file, an area 410B corresponding to a picture, an area 410C corresponding to a document, an area 410D corresponding to a compressed package, and another area 410E. Each area may include a name of the area and an icon corresponding to data in the area. The name of the area may be a type corresponding to the area or a user-customized name. For example, the area 410A includes a name 4101 named "file".

The application bar 411 is used to display an application icon. The folder 412 is a folder shown in this embodiment of this application, and the folder 412 includes a file 1, a file 2, and a file 3.

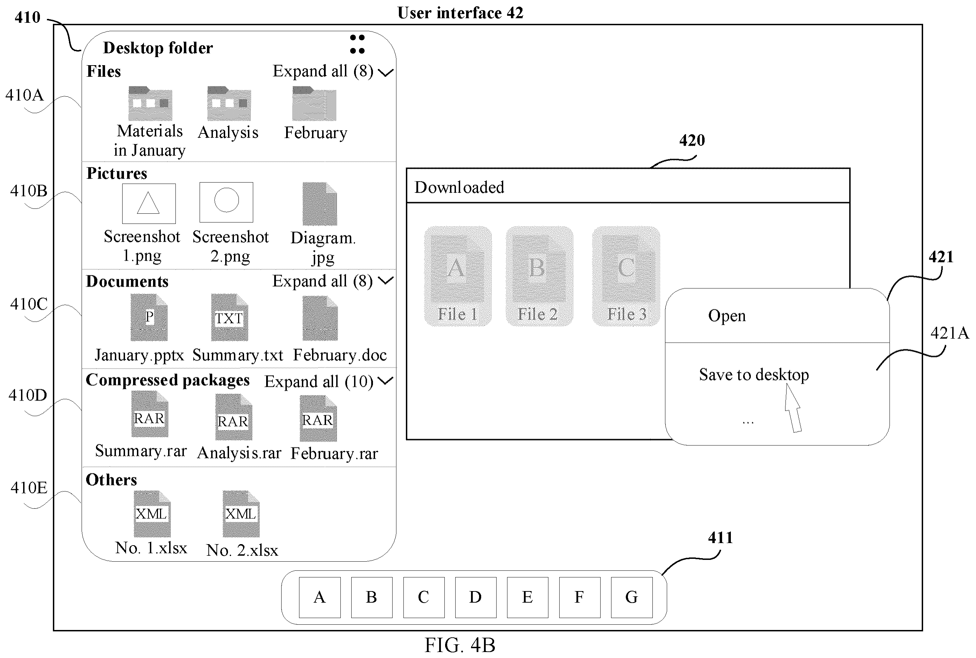

As shown in FIG. 4A, when detecting a user operation of selecting the file 1, the file 2, and the file 3, the electronic device displays the files as a selected state, for example, a gray state presented by file icons shown in FIG. 4B, in response to the user operation. In addition, when detecting a user operation of displaying a setting bar of the selected files (for example, an operation of clicking a right mouse button), the electronic device displays the setting bar of the selected files, for example, a setting bar 421 shown in FIG. 4B, in response to the user operation. The setting bar 421 includes a save control 421A.

As shown in FIG. 4B, when detecting a user operation on the save control 421A, the electronic device places the selected files into the desktop folder based on types, that is, displays the icons of the selected files in the desktop folder.

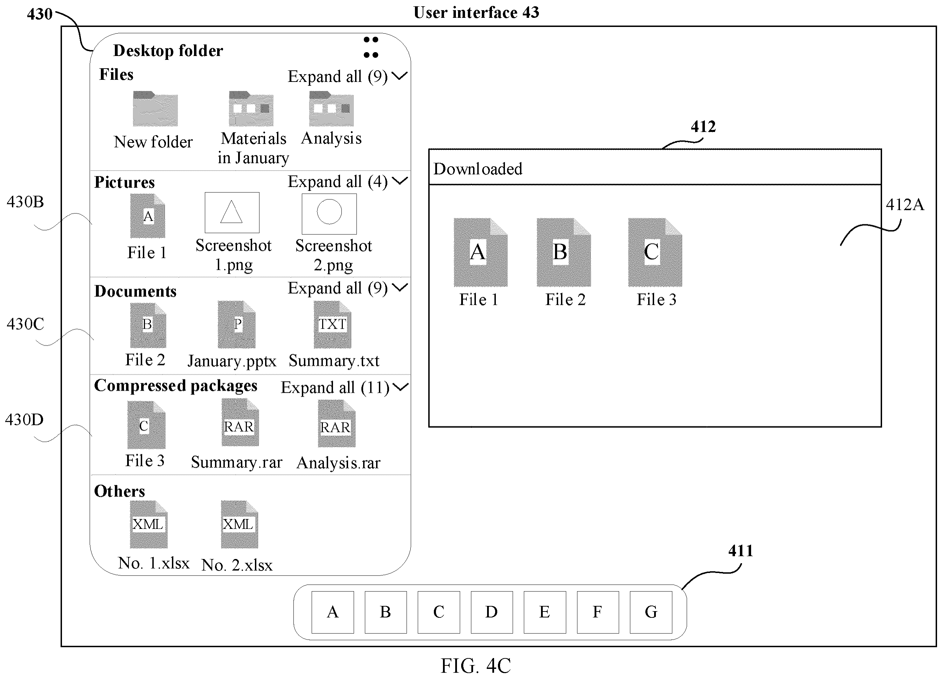

Assuming that a type of the file 1 is a picture, a type of the file 2 is a document, and a type of the file 3 is a compressed package, the electronic device may display a user interface 43 shown in FIG. 4C. In the user interface 43, an icon corresponding to the file 1 is displayed in an area 430B corresponding to a picture in the desktop folder 430, an icon corresponding to the file 2 is displayed in an area 430C corresponding to a document in the desktop folder 430, and an icon corresponding to the file 3 is displayed in an area 430D corresponding to a compressed package in the desktop folder 430.

A difference between the user interface 43 and the user interface 41 may only lie in that the icon corresponding to the file 1, the icon corresponding to the file 2, and the icon corresponding to the file 3 are added to the desktop folder 430 in the user interface 43 compared with the desktop folder 310 in the user interface 41.

In some other embodiments, the electronic device may save, in response to a user operation of dragging a file, the file to an area, in the desktop folder, corresponding to a type of the file. It should be noted that a quantity of files to be dragged is not limited in this embodiment of this application.

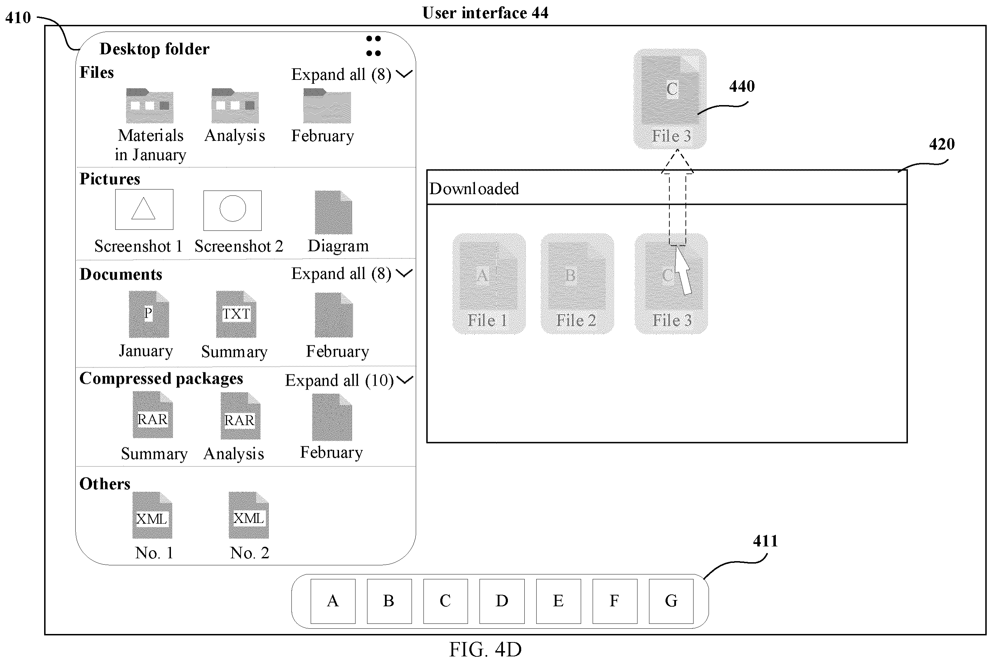

As shown in FIG. 4D, when a file is in a selected state (a file 1, a file 2, and a file 3 in a user interface 44), the user may drag the file to a desktop area by using a mouse. In response to the user operation, the electronic device displays a track of an icon 440 of the selected file in a dragging process; and when detecting a user operation of dragging the icon 440 to the desktop area and releasing the icon 440, displays the selected file in an area, in the desktop folder, corresponding to a type of the selected file.

For example, if a type of the file 1 is a picture, a type of the file 2 is a document, and a type of the file 3 is a compressed package, the electronic device may display the user interface 43 shown in FIG. 4C. In the user interface 43, an icon corresponding to the file 1 is displayed in an area corresponding to a picture, an icon corresponding to the file 2 is displayed in an area corresponding to a document, and an icon corresponding to the file 3 is displayed in an area corresponding to a compressed package.

For example, the icon 440 is displayed as an icon formed by overlapping icons of a plurality of selected files. It should be understood that in another implementation of this application, the icon may alternatively be in a state in which icons of a plurality of selected files are arranged side by side. This is not limited herein.

The following describes an example of a folding function of the desktop folder.

In some embodiments, the electronic device may display only a part of icons in the desktop folder, and manage displaying or folding of another icon that is not the displayed icon in the desktop folder by using an expand control. For example, when the another icon is in a displayed state, the electronic device hides the another icon in response to a user operation on the expand control, that is, folds the another icon; or when the another icon is in a folded state, displays the another icon in response to a user operation on the expand control.

Optionally, the desktop folder may include one or more expand controls. For example, if the desktop folder is not a desktop folder for classification management (the desktop folder 310 shown in FIG. 3A), the desktop folder may include one expand control, the expand control is used to display or fold a part of icons, and the part of icons may be icons that are not displayed in a display area in the current desktop folder.

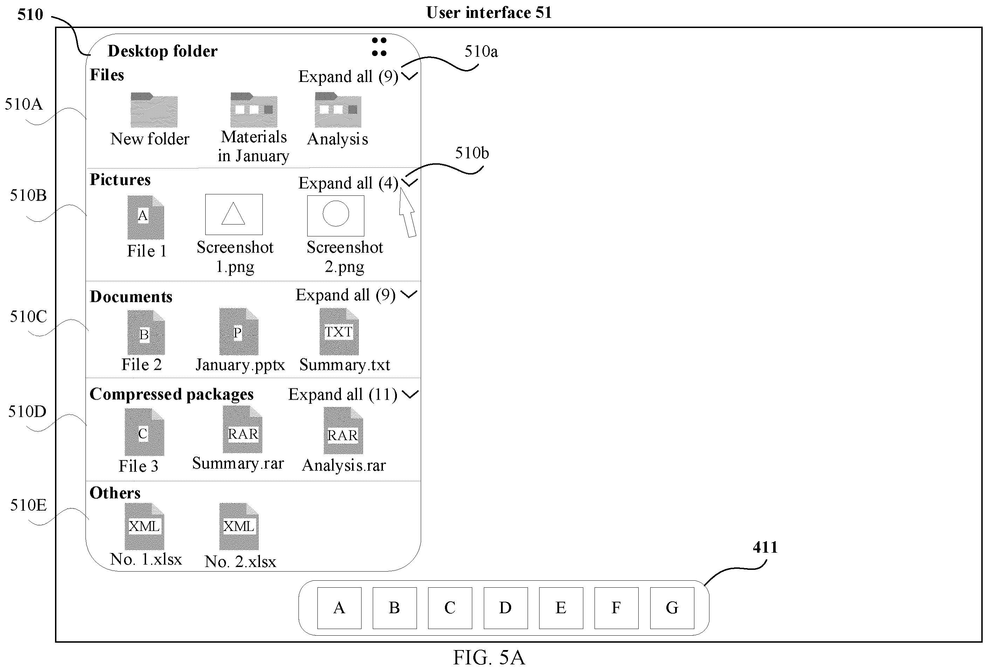

For another example, if the desktop folder is a desktop folder for classification management, a part of areas in the desktop folder may correspond to one expand control, and the expand control is used to manage an icon corresponding to the area. In a user interface 51 shown in FIG. 5A, a desktop folder 510 includes a plurality of areas, and an expand control corresponding to the area is displayed in a part of areas in the plurality of areas, for example, an expand control 510a corresponding to an area 510A and an expand control 510b corresponding to an area 510B.

Optionally, the desktop folder for classification management may display a total quantity of pieces of data in each area. In the user interface 51 shown in FIG. 5A, the area 510B in the desktop folder 510 includes the expand control 510b, and a total quantity of pieces of data in the display area 510B on the expand control 510b is 4.

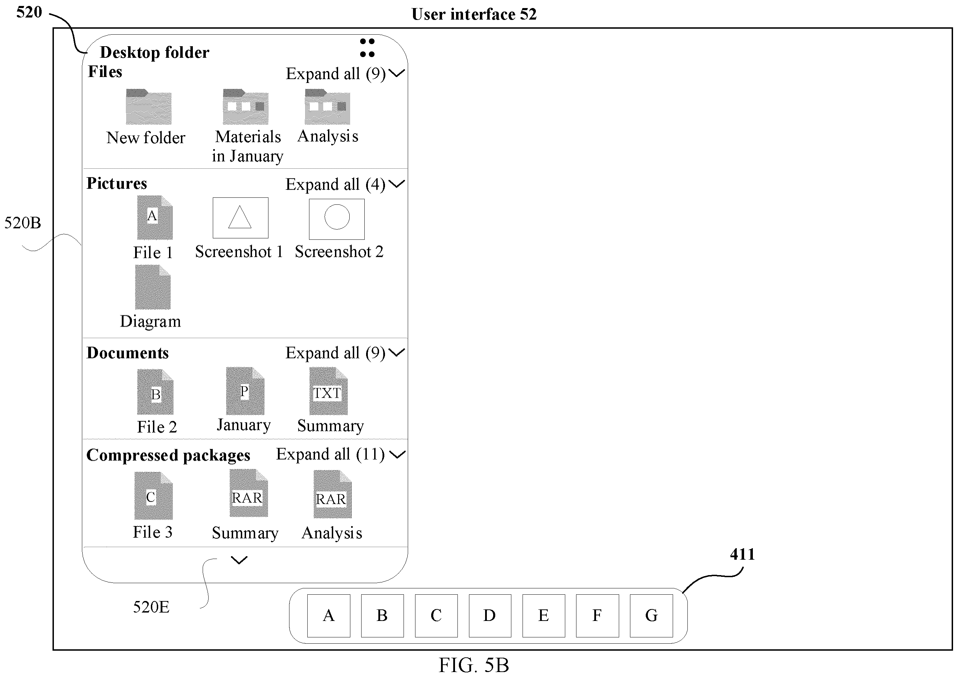

The following describes an example of the folding function of the desktop folder with reference to FIG. 5A and FIG. 5B.

FIG. 5A is an example of the user interface 51 on the electronic device according to an embodiment of this application. As shown in FIG. 5A, the user interface 51 includes the desktop folder 510 and the application bar 411.

The desktop folder 510 includes a plurality of areas, and the areas corresponds to different types, for example, an area 510A corresponding to a file, an area 510B corresponding to a picture, an area 510C corresponding to a document, an area 510D corresponding to a compressed package, and another area 510E. The application bar 411 is used to display at least one application icon. The another area 510E may be used to display another type of data whose type does not conform to the file, the picture, the document, and the compressed package.

If a quantity of icons included in an area in the desktop folder 510 is greater than a quantity of icons displayed in the area, the area further includes an expand control corresponding to the area. As shown in FIG. 5A, if a quantity of icons in the area 510B corresponding to the picture is 4, and a quantity of icons displayed in the area 510B is only 3, an expand control corresponding to the area 510B is 510b; and if a quantity of icons in the another area 510E is 2, and a quantity of icons displayed in the another area 510E is 3, an expand control corresponding to the another area 510E may not be displayed in the another area 510E.

It should be understood that the desktop folder 510 shows, for example, that a maximum of three icons are displayed in each area in the desktop folder when the area is in a folded state. It should be understood that in another embodiment of this application, a quantity of icons displayed in each area in the desktop folder may be different. A shape, a size, and a location of the desktop folder are not limited in this application.

In some embodiments, when detecting a user operation on an expand control corresponding to an area in the desktop folder, the electronic device displays, in response to the user operation, all icons included in the area, that is, displays an unfolded state of the area.

Optionally, when displaying all icons in the area, the electronic device may further set at least one area other than the area in the desktop folder to be in a folded state.

As shown in FIG. 5A, when detecting a user operation on the expand control 510b corresponding to the area 510B in the desktop folder 510, the electronic device displays, in response to the user operation, all icons included in the area 510B. For example, the electronic device may display a user interface 52 shown in FIG. 5B.

The user interface 52 includes a desktop folder 520 and the application bar 411.

A difference between the desktop folder 520 and the desktop folder 510 in the user interface 51 lies in that: (1) The area 510B in the desktop folder 510 is in a preview state, and only three icons are displayed; and the area 510B in the desktop folder 520 is in an unfolded state, and icons corresponding to all data included in the area 510B are displayed. (2) The another area 510E in the desktop folder 510 is in a preview state, and two icons are displayed; and the another area 510E in the desktop folder 520 is in a folded state.

The desktop folder 510 is configured to classify and display at least one file icon or folder icon. The desktop folder 510 includes a plurality of areas, and areas corresponds to different types, for example, an area 510A corresponding to a file, an area 510B corresponding to a picture, an area 510C corresponding to a document, an area 510D corresponding to a compressed package, and another area 510E. The application bar 411 is used to display at least one application icon.

Next, a preview manner of the desktop folder is described by using examples.

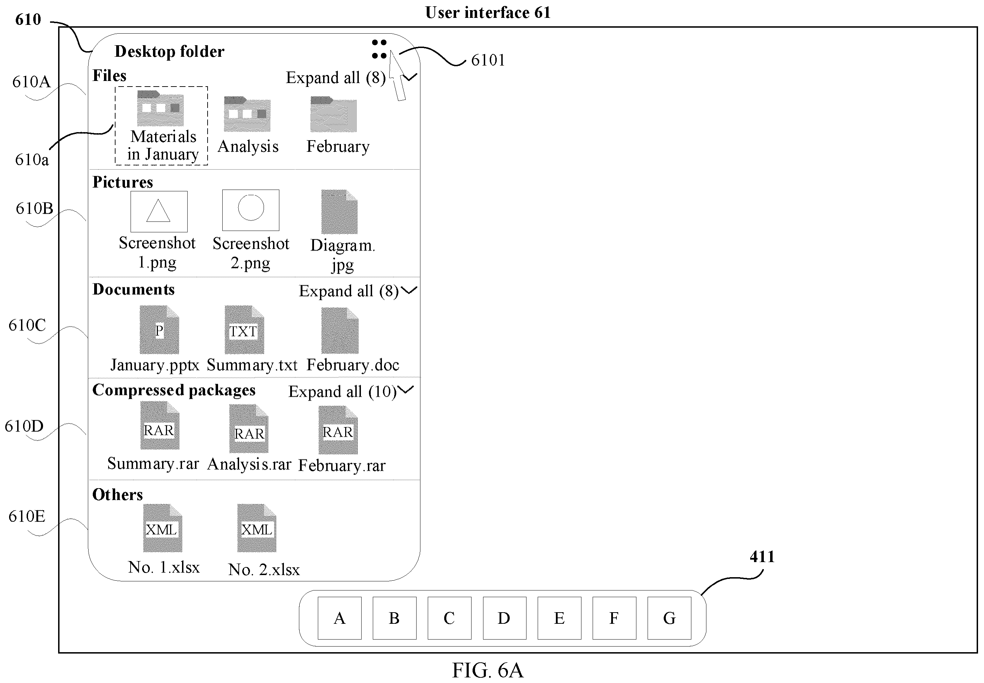

First preview manner (grid view): The desktop folder includes a plurality of areas corresponding to different types, an icon is displayed in each area by using a grid, and an icon corresponding to one piece of data is displayed in each grid. The icon may include a graph corresponding to the data, a name of the data, and the like. For example, refer to FIG. 6A.

FIG. 6A is an example of a user interface 61 on the electronic device according to an embodiment of this application. As shown in FIG. 6A, the user interface 61 includes a desktop folder 610 and the application bar 411.

The desktop folder 610 includes a setting control 6101 and a plurality of areas corresponding to different types, for example, an area 610A corresponding to a file, an area 610B corresponding to a picture, an area 610C corresponding to a document, an area 610D corresponding to a compressed package, and another area 610E.

Each area is used to manage a data icon of a type corresponding to the area. For example, the area 610A corresponding to the file is used to manage a folder icon, and the area 610B corresponding to the picture is used to manage a picture icon. Each icon may include a graph corresponding to the icon and a name corresponding to the icon. For example, a graph corresponding to a 1^{st} icon 610a in the area 610A is a folder graph, and a name is "Materials in January". For another example, a graph corresponding to a picture icon in the area 610B may be a thumbnail of the picture, and a name may be a name and a suffix of the picture, (for example, .png).

In some embodiments, when detecting a user operation on the setting control of the desktop folder, the electronic device may change a preview manner of the desktop folder in response to the user operation.

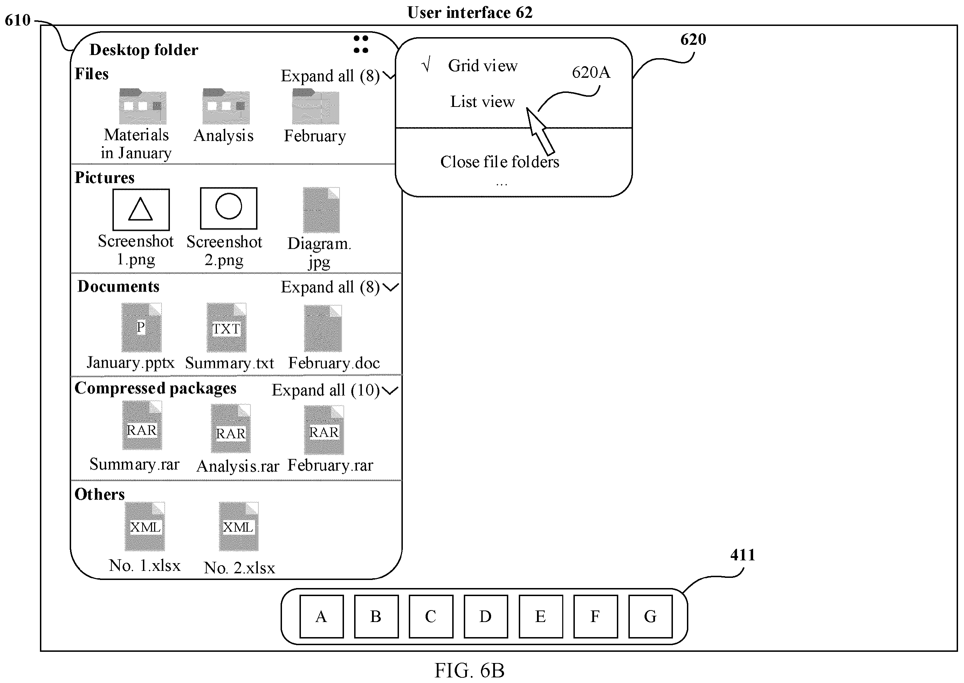

Second preview manner (list view): The desktop folder includes a plurality of areas corresponding to different types, an icon is displayed in each area by using a row, and an icon corresponding to one piece of data is displayed in each row. The icon may include a graph corresponding to the data, a name of the data, and the like. For example, refer to FIG. 6B.

As shown in FIG. 6A, when detecting a user operation on the setting control 6101, the electronic device may display a user interface 62 shown in FIG. 6B. The user interface 62 includes the desktop folder 610, the application bar 411, and a setting bar 620, and the setting bar 620 includes a plurality of options, for example, a list view 620A.

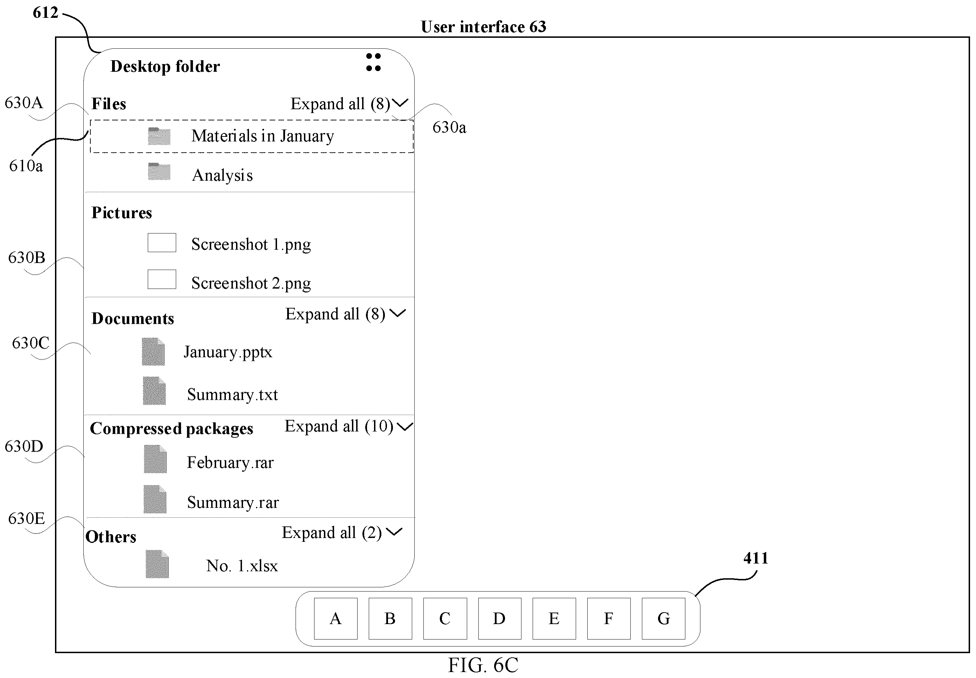

As shown in FIG. 6B, when detecting a user operation on the list view 620A, the electronic device changes the preview manner of the desktop folder from the grid view to the list view. For example, the electronic device may display a user interface 63 shown in FIG. 6C, and the user interface 63 includes a desktop folder 630 and the application bar 411. A preview manner of the desktop folder 630 is a list view.

As shown in FIG. 6C, the desktop folder 630 includes a plurality of areas corresponding to different types, for example, an area 630A corresponding to a file, an area 630B corresponding to a picture, an area 630C corresponding to a document, an area 630D corresponding to a compressed package, and another area 630E.

Each area is used to manage a data icon of a type corresponding to the area. For example, the area 630A corresponding to the file is used to manage a folder icon, and the area 630B corresponding to the picture is used to manage a picture icon. Each icon may include a graph corresponding to the icon and a name corresponding to the icon. For example, a graph corresponding to a 1^{st} icon 630a in the area 630A is a folder graph, and a name is "Materials in January". For another example, a graph corresponding to a picture icon in the area 630B may be a thumbnail of the picture, and a name may be a name and a suffix of the picture, (for example, .png).

Next, personalized settings of the desktop folder are described by using examples.

In some embodiments, the electronic device may adjust a size, a location, background transparency, a background blur value, and the like of the desktop folder in response to a set operation on the desktop folder.

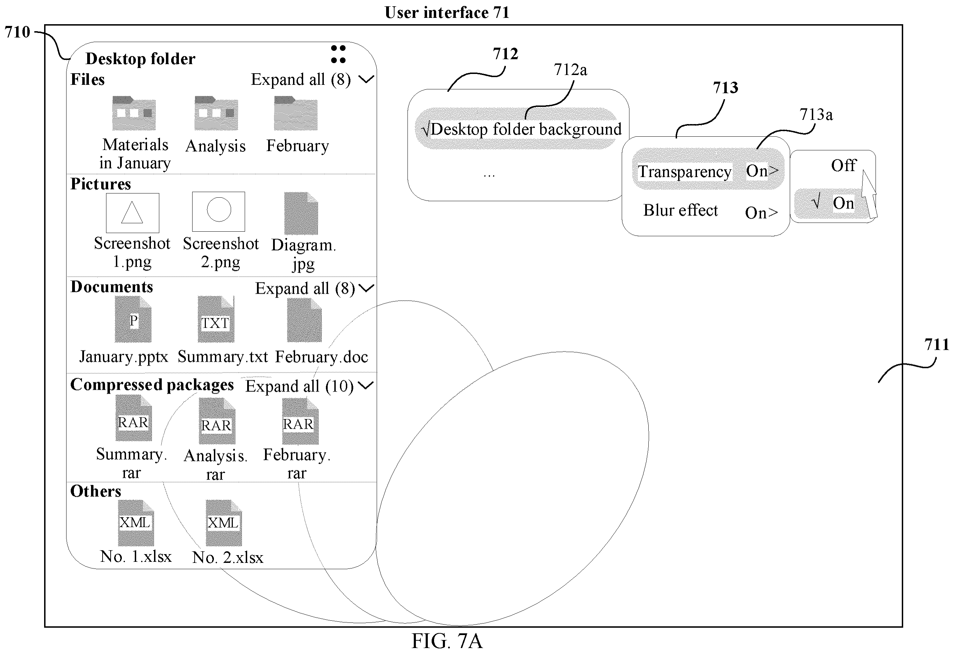

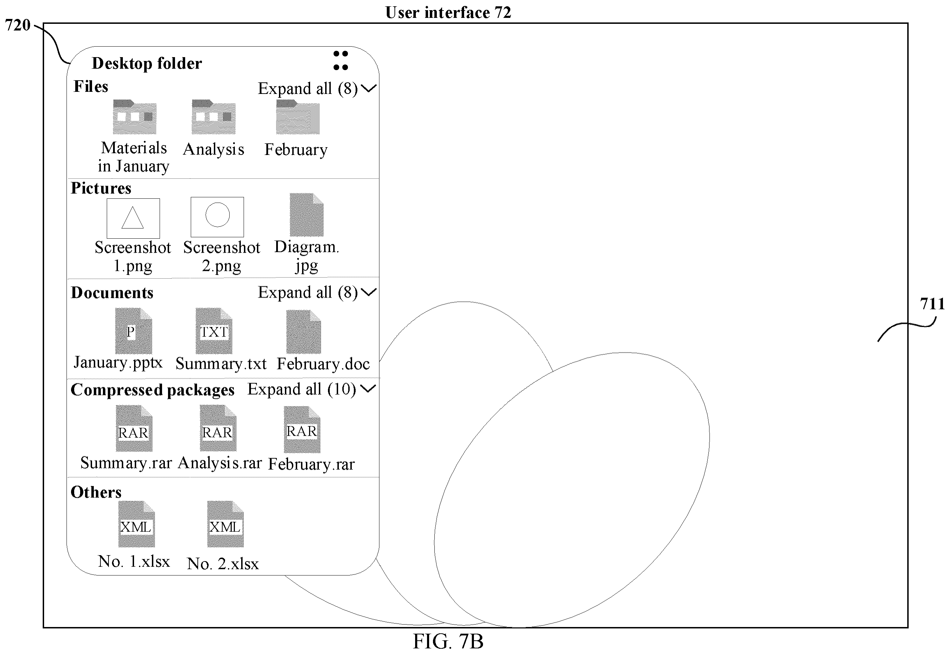

FIG. 7A and FIG. 7B are examples of desktop folders when background transparency is enabled and disabled.

FIG. 7A is a diagram of a desktop folder when transparency is enabled according to an embodiment of this application. As shown in FIG. 7A, a user interface 71 includes a desktop folder 710, a desktop background 711, and a setting bar 712. The desktop folder 710 is in a state in which transparency is enabled, and a pattern of the desktop background 711 may be seen through the desktop folder 710.

For specific content displayed in the desktop folder 710, refer to the desktop folder 310, the desktop folder 410, and the like above. The setting bar 712 may be popped up in response to an operation of clicking a right mouse button on the desktop background, or may be displayed by using another user operation.

As shown in FIG. 7A, when detecting a user operation on a background control 712a in the setting bar 712, the electronic device may display an auxiliary setting bar 713 in response to the user operation; and further, disable transparency in response to a user operation on a transparency control 713a in the auxiliary setting bar 713. For example, the electronic device may display a user interface 72 shown in FIG. 7B.

FIG. 7B is a diagram of a desktop folder when transparency is disabled according to an embodiment of this application. As shown in FIG. 7B, the user interface 72 includes a desktop folder 720 and the desktop background 711. The desktop folder 720 is in a state in which transparency is disabled, and the desktop folder 720 blocks a part of content of the desktop background 711.

A difference between the desktop folder 720 and the desktop folder 710 in the user interface 71 may only lie in that: a background of the desktop folder 720 is in a state in which transparency is disabled, and a pattern of a desktop background under the desktop folder 720 is invisible; and a background of the desktop folder 710 is in a state in which transparency is enabled, and a desktop background under the desktop folder 710 may be seen.

In some other embodiments, the electronic device may further adjust a background blur degree of the desktop folder in response to a user operation. It should be understood that when the background blurring degree is high, desktop content behind the desktop folder is in a fuzzy state; and when no blur degree is set, the desktop content behind the desktop folder may be clearly seen.

In some other embodiments, the electronic device may adjust a display location of the desktop folder in response to a user operation of dragging the desktop folder, or the electronic device may display, in response to a user operation on the setting bar for the desktop folder, an input bar in which length and width parameters and location information of the desktop folder may be input, and adjust a length, a width, and a location of the desktop folder in response to the length and width parameters and the location information that are input by the user for the input bar.

The following describes an example of an embodiment of an added desktop folder.

In some embodiments, the electronic device may display one or more desktop folders, and the electronic device may display a created desktop folder in response to a user operation of creating the desktop folder.

In an implementation, the electronic device displays, on a desktop in response to a user operation of creating a file folder corresponding to a folder in the desktop folder, the created file folder corresponding to the folder, and the file folder is used to display an icon of data in the folder.

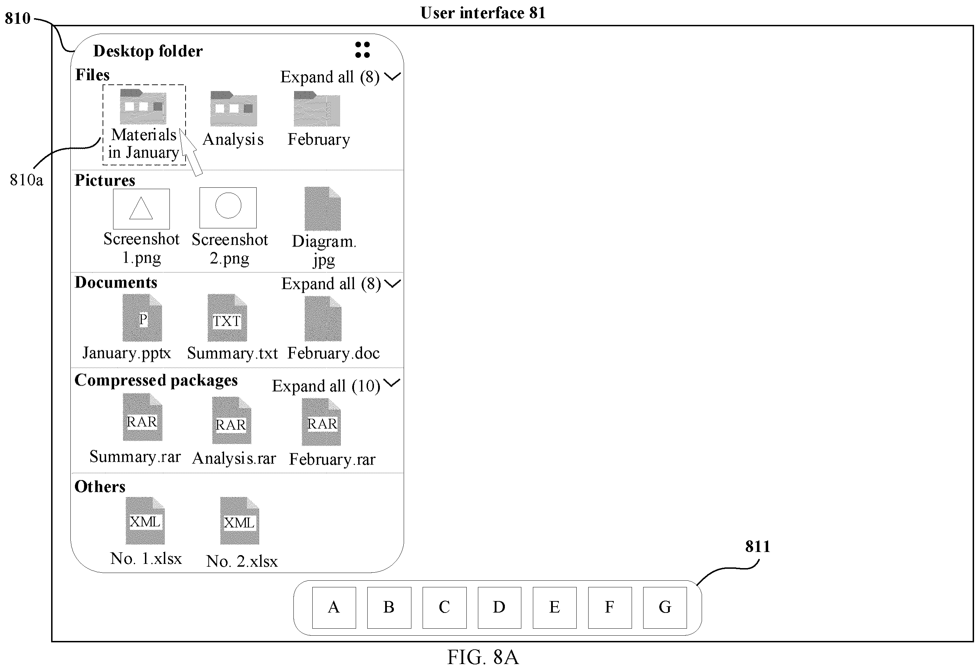

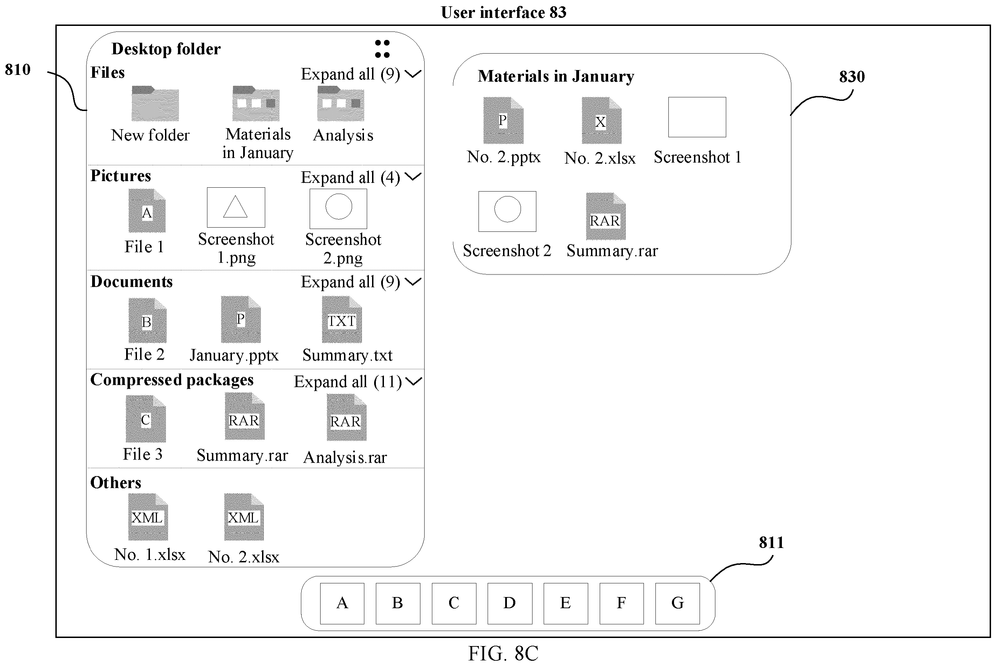

Optionally, a name of the created file folder may be the same as a name of an original folder. For example, the original folder may be a folder whose name is "Materials in January" shown in a folder icon 810a in FIG. 8A, a file folder created by the electronic device based on the original folder may be a file folder 830 shown in FIG. 8C, and a name of the file folder 830 and the name of the original folder are the same and both are "Materials in January".

It should be understood that for ease of description, in this embodiment of this application, for example, a desktop folder corresponding to a folder is referred to as a file folder, which should not constitute a limitation on this application. In another embodiment of this application, the file folder may also be referred to as a desktop folder or a widget FA.

The following describes an example of a process of adding a desktop folder by using examples in which a file folder corresponding to a folder is added. Refer to FIG. 8A to FIG. 8C.

FIG. 8A is an example of a user interface 81 on the electronic device according to an embodiment of this application. As shown in FIG. 8A, the user interface 81 includes a desktop folder 810 and an application bar 811, and the desktop folder 810 includes a plurality of icons, for example, the folder icon 810a named "Materials in January".

For specific content of the desktop folder 810, refer to related descriptions of the desktop folder 310 and the desktop folder 410 above; and for specific content of the application bar 811, refer to related descriptions of the application bar 411 above.

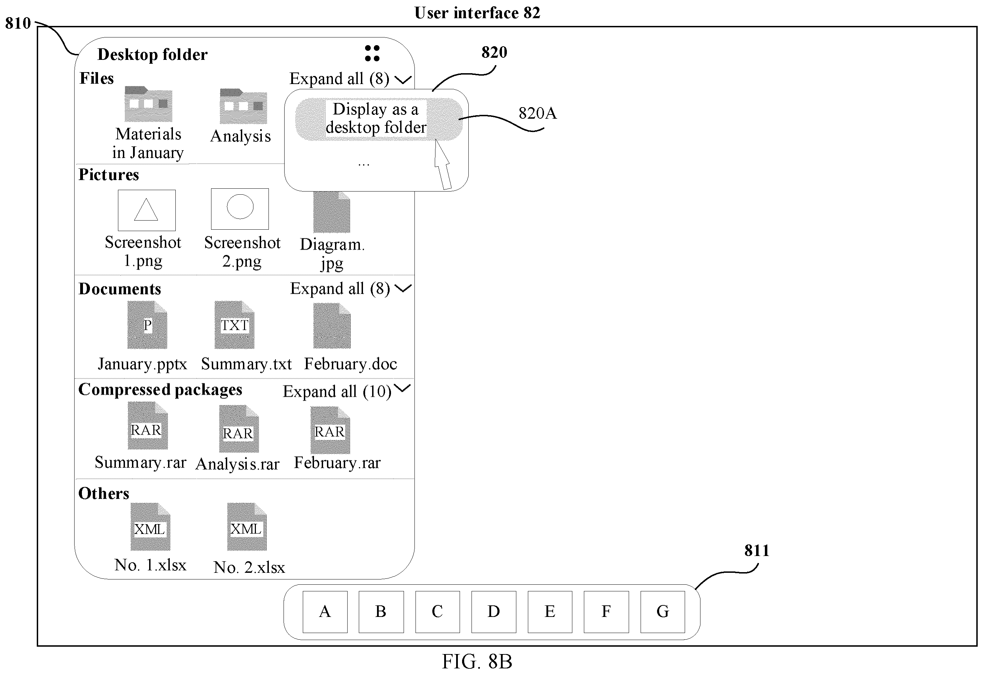

As shown in FIG. 8A, when detecting a user operation (for example, clicking a right mouse button) on the folder icon 810a, the electronic device displays, in response to the user operation, a setting bar corresponding to the folder icon 810a. For example, the electronic device may display a user interface 82 shown in FIG. 8B, and the user interface 82 includes a setting bar 820 corresponding to the folder icon 810a.

The user interface 82 includes the desktop folder 810, the application bar 811, and the setting bar 820 corresponding to the folder icon 810a, and the setting bar 820 includes a display option 820A.

As shown in FIG. 8B, when detecting a user operation on the display option 820A, the electronic device displays, in response to the user operation, a folder corresponding to the folder icon 810a as a desktop folder. For example, the electronic device may display a user interface 83 shown in FIG. 8C, and the user interface 83 includes a file folder 830 corresponding to the folder icon 810a.

The user interface 83 includes the desktop folder 810, the application bar 811, and the file folder 830 corresponding to the folder icon 810a, and the file folder 830 includes icons corresponding to all data of the folder corresponding to the folder icon 810a.

In another implementation, the electronic device may display an original desktop folder, and the electronic device may split, in response to a user operation of splitting the original desktop folder, the original desktop folder into a plurality of desktop folders for displaying. For example, if the desktop folder is a desktop folder for classification management, the electronic device may perform splitting based on a type. For example, an area corresponding to a type is displayed as an independent desktop folder.

As shown in FIG. 4A, the desktop folder 410 includes five areas, which are respectively the area 410A corresponding to the file, the area 410B corresponding to the picture, the area 410C corresponding to the document, the area 410D corresponding to the compressed package, and the another area 410E. Assuming that the desktop folder 410 is an original desktop folder, when a user operation of splitting the desktop folder 410 for the electronic device is detected, the desktop folder 410 may be split into five desktop folders, and the five desktop folders respectively correspond to five areas in the desktop folder 410.

Optionally, the split desktop folder may be in one-to-one correspondence with an area in the original desktop, and a name of the split desktop folder may be the same as a name of the area corresponding to the desktop folder. For example, a name of a desktop folder in the five desktop folders obtained after the desktop folder 410 shown in FIG. 4A is split may be the same as a name of an area corresponding to the desktop folder. For example, if the name 4101 of the area 410A corresponding to the file is "file", the name of the desktop folder corresponding to the area 410A may be "file".

Optionally, the electronic device may display, in a preset area, the desktop folder obtained through splitting.

Optionally, the electronic device may separately display, in response to a user operation of dragging the desktop folders obtained through splitting, the desktop folders obtained through splitting in different areas on the desktop.

The following describes an example of a desktop folder corresponding to a theme.

In some embodiments, the electronic device may create and display, in response to a user operation, a desktop folder corresponding to a theme. The desktop folder corresponding to the theme is used to display content related to the theme. The theme may be determined by the user, for example, a "pc project" or a "Traveling on National Day". The content related to the theme may include a service widget, an application icon, a file icon, a folder icon, and the like.

In an implementation, the electronic device creates a blank desktop folder in response to a user operation for creating the blank desktop folder, where the blank desktop folder may be an area that does not include an icon; and further, in response to a user operation of adding related content of a first theme to the blank desktop folder, displays the added content in the desktop folder. For the added process, refer to related descriptions in FIG. 3A to FIG. 4D above. Optionally, the first theme may be used as a name of the desktop folder. Optionally, the electronic device may further delete, fold, or display content in the desktop folder in response to the user operation. For details, refer to the related embodiment above.

In another implementation, the electronic device creates and displays, in response to a user operation on a folder of the first theme, a desktop folder corresponding to a second theme, where content in the desktop folder of the second theme includes content of a folder of the second theme. For a creation process, refer to related descriptions of FIG. 8A to FIG. 8C above.

Optionally, the content in the desktop folder may also be automatically added by the electronic device based on related information of the desktop folder, where the related information may include a name of the desktop folder, a plan table associated with the desktop folder, or the like. For example, the user creates a desktop folder named "travel", and the electronic device adds, to the desktop folder, elements such as an application (for example, a weather application or a ticket buying application) and a service widget that are related to the name. For another example, the desktop folder includes a plan table, and the plan table includes information about another application or file. The electronic device may identify information in the plan table, and add, to the desktop folder, an application, a file, a service widget, or the like corresponding to the information.

Optionally, locations of elements in a service widget, an application icon, and a file icon in the desktop folder may be moved. Optionally, the locations of the elements in the desktop folder may be determined based on a user operation, or may be automatically adjusted by the electronic device based on a size of the desktop folder. The size of the desktop folder is not limited in this embodiment of this application.

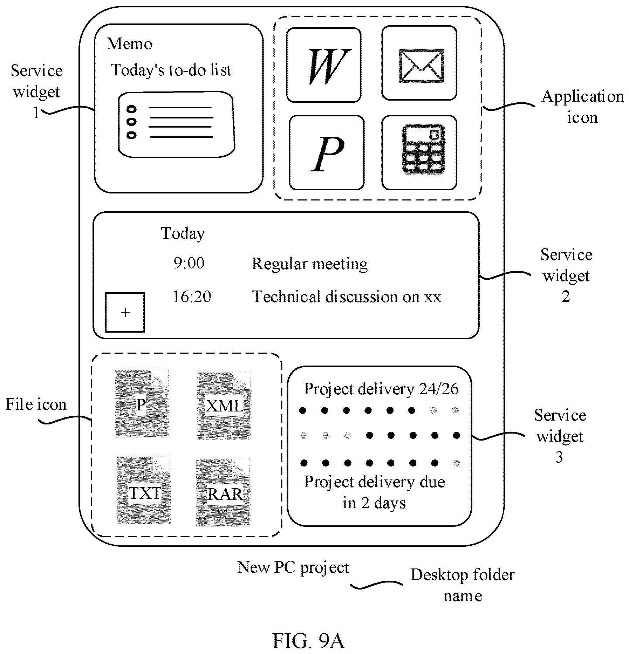

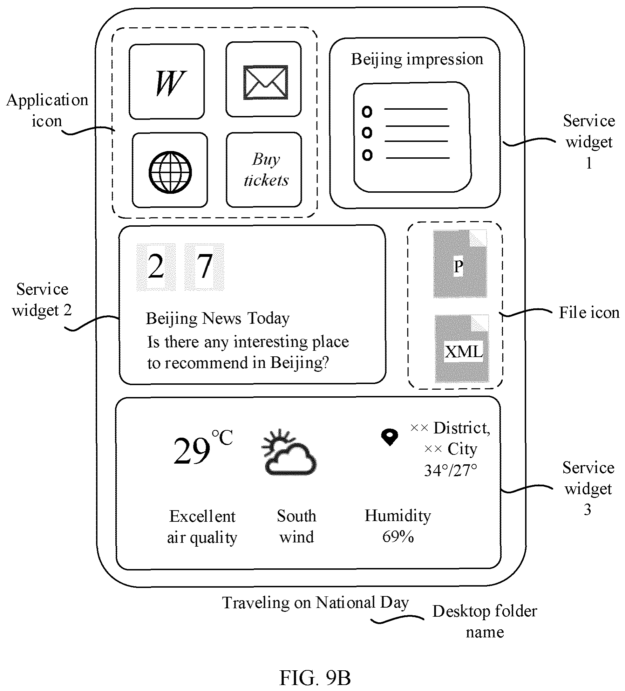

FIG. 9A and FIG. 9B are examples of providing a specific form of a desktop folder corresponding to a theme.

FIG. 9A is an example of a specific form of a desktop folder named "new PC project". The desktop folder includes content related to the "new PC project". As shown in FIG. 9A, the desktop folder includes a service widget, an application icon, and a file icon. FIG. 9A is an example of a service widget 1 corresponding to a memo, a service widget 2 corresponding to a plan table, a service widget 3 corresponding to a calendar, application icons respectively corresponding to office software (for example, WPS and PPT), an email application, a calculator application, and the like, and file icons corresponding to a compressed package, a text, and the like.

FIG. 9B is an example of a specific form of a desktop folder named "Traveling on National Day". The desktop folder includes content related to "Traveling on National Day". As shown in FIG. 9B, the desktop folder includes a service widget, an application icon, and a file icon. FIG. 9B is an example of a service widget 1 corresponding to a log, a service widget 2 corresponding to a specific application, a service widget 3 corresponding to a weather application, application icons respectively corresponding to a travel application, an email application, a ticket buying application, and the like, and file icons corresponding to Excel, PPT, and the like.

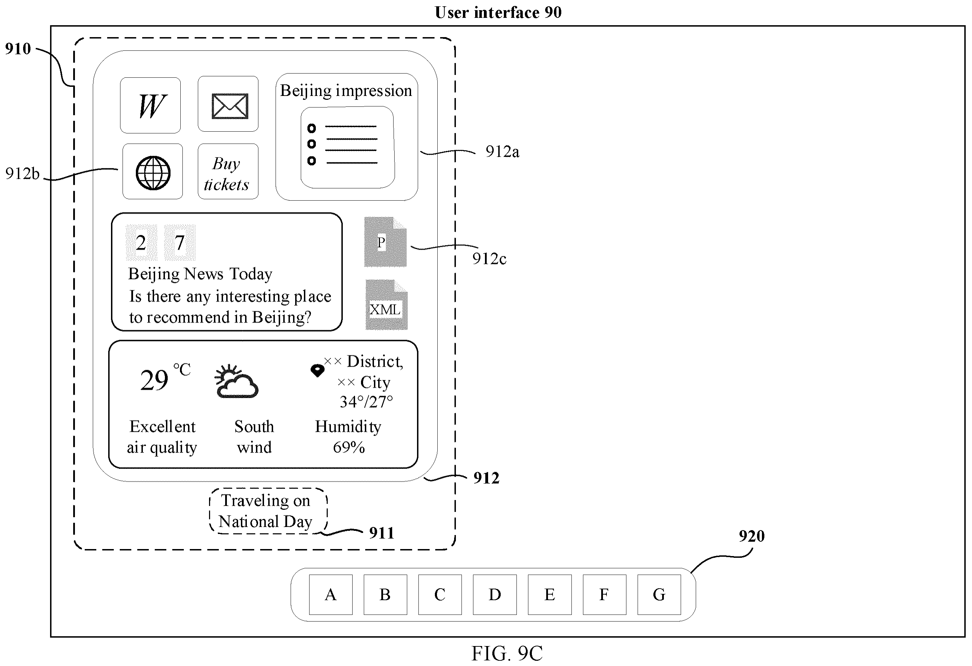

FIG. 9C is a diagram of a user interface according to an embodiment of this application.

As shown in FIG. 9C, the user interface 90 includes a desktop folder 910 and an application bar 920, the desktop folder 910 is configured to display content related to "Traveling on National Day", and the application bar 920 is configured to display an application icon.

As shown in FIG. 9C, the desktop folder 910 includes a name 911 of the desktop folder and a desktop folder body 912, and the desktop folder body 912 may include a service widget 912a corresponding to a log, an application icon 912b corresponding to a browser, a file icon 912c corresponding to a PPT, and the like.

The service widget is an information carrier with a closed contour, and provides important or closely related information intuitively and quickly in a concentrated form, for information displaying and exchange. A shape of the service widget is usually a rounded rectangle, similar to a shape of a credit card, and certainly may alternatively be another shape. The service widget enables the user of the electronic device to obtain information and perform an operation more conveniently and intuitively, and therefore is widely applied. A size, a location, a shape, and the like of the service widget are not limited in this embodiment of this application. In addition, the service widget may be a widget used by a local application or an applet. Alternatively, the service widget may be a service that is directly provided for the electronic device and that does not have a corresponding local application. This is not limited in this application.

An embodiment of this application further provides an electronic device. The electronic device includes one or more processors and one or more memories, the one or more memories are coupled to the one or more processors, the one or more memories are configured to store computer program code, and the computer program code includes computer instruction; and when the one or more processors execute the computer instructions, the electronic device is enabled to perform the method described in the foregoing embodiments.

An embodiment of this application further provides a computer program product including instructions. When the computer program product is run on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It may be understood that the various implementations of this application may be arbitrarily combined to achieve different technical effect.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the processes of the methods in embodiments may be implemented by a computer program instructing relevant hardware. The program may be stored in a computer-readable storage medium. When the program is run, the processes of the methods in embodiments are performed. The foregoing storage medium includes any medium that can store program code, such as a ROM, a random access memory RAM, a magnetic disk, or an optical disc.

In summary, the foregoing descriptions are merely embodiments of the technical solutions of this application, but are not intended to limit the protection scope of this application. Any modification, equivalent replacement, improvement, or the like made based on the disclosure of this application shall fall within the protection scope of this application.

## Claims

1. A desktop management method, applied to an electronic device, wherein the method comprises:
displaying, by the electronic device, a desktop folder on a desktop, wherein the desktop folder is used to display at least one icon; and
adding, by the electronic device to the desktop folder in response to a user operation on target data, a first icon corresponding to the target data.

2. The method according to claim 1, wherein adding, by the electronic device to the desktop folder in response to the user operation on the target data, the first icon corresponding to the target data comprises:
displaying, by the electronic device, the first icon in the desktop folder in response to a user operation of dragging the target data to the desktop.

3. The method according to claim 1 or 2, wherein adding, by the electronic device to the desktop folder in response to the user operation on the target data, the first icon corresponding to the target data comprises:
displaying, by the electronic device, a setting bar in response to a user operation of indicating to display the setting bar of the target data, wherein the setting bar comprises a save control, and the save control is used to save the target data to the desktop; and
displaying, by the electronic device, the first icon in the desktop folder in response to a user operation on the save control.

4. The method according to any one of claims 1 to 3, wherein the desktop folder comprises a plurality of areas, and each of the plurality of areas is used to display an icon corresponding to data of one data type; the plurality of areas comprise a first area; and adding, to the desktop folder, the first icon corresponding to the target data comprises:
displaying, by the electronic device, the first icon in the first area, wherein a data type corresponding to the first area is a data type of the target data.

5. The method according to claim 4, wherein the data type comprises at least one of the following: a picture, a video, a document, or a compressed package.

6. The method according to any one of claims 1 to 5, wherein before adding, to the desktop folder, the first icon corresponding to the target data, the method comprises:
displaying, by the electronic device, a first application window on the desktop, wherein the first application window comprises the target data, and the target data is local data or online data.

7. The method according to any one of claims 1 to 6, wherein the method further comprises:
displaying, by the electronic device, a file folder on the desktop in response to a user operation on a second icon in the desktop folder, wherein the file folder is used to display a file icon in a folder corresponding to the second icon.

8. The method according to any one of claims 1 to 7, wherein the desktop folder comprises a plurality of areas, and each of the plurality of areas is used to display an icon corresponding to data of one data type; each of the plurality of areas corresponds to one foldable control; and the foldable control is used to display all icons in the area corresponding to the foldable control, or display a part of icons in the area corresponding to the foldable control.

9. The method according to any one of claims 1 to 8, wherein the target data comprises at least one of the following: a file, a folder, an application, or an application icon.

10. The method according to any one of claims 1 to 9, wherein a display manner of the at least one icon in the desktop folder is a list view or a grid view.

11. The method according to any one of claims 1 to 10, wherein the method further comprises:
adjusting, by the electronic device, an appearance of the desktop folder in response to a set operation on the desktop folder, wherein the appearance comprises at least one of the following: a size, a location, background transparency, and a background blur value.

12. The method according to any one of claims 1 to 11, wherein all icons in the desktop folder are associated with a theme, and the icons in the desktop folder comprise at least one of a service widget, an application icon, a file icon, and a folder icon.

13. A desktop management method, applied to an electronic device, wherein the method comprises:
displaying, by the electronic device, a desktop folder on a desktop, wherein the desktop folder is used to display at least one icon, the desktop folder comprises a plurality of areas, and each of the plurality of areas is used to display an icon corresponding to data of one data type; and the plurality of areas comprise a first area; and
adding, by the electronic device to the first area in response to a user operation on target data, a first icon corresponding to the target data, wherein a data type corresponding to the first area is a data type of the target data.

14. An electronic device, wherein the electronic device comprises one or more processors and one or more memories, the one or more memories are coupled to the one or more processors, the one or more memories are configured to store computer program code, and the computer program code comprises computer instructions; and when the one or more processors execute the computer instructions, the electronic device is enabled to perform the method according to any one of claims 1 to 13.

15. A computer program product comprising instructions, wherein when the computer program product is run on an electronic device, the electronic device is enabled to perform the method according to any one of claims 1 to 13.

16. A computer-readable storage medium, comprising instructions, wherein when the instructions are run on an electronic device, the electronic device is enabled to perform the method according to any one of claims 1 to 13.
